# EUROPÄISCHE PATENTSCHRIFT

(11) **EP 0 479 726 B1**
(45) Veröffentlichungstag und Bekanntmachung des Hinweises auf die Patenterteilung: **14.08.1996**
(21) Anmeldenummer: 91810753.3
(22) Anmeldetag: 25.09.1991
(51) Int. Cl.: C09B 67/36

(54) **Konzentrierte wässrige Lösungen anionischer Disazofarbstoffe**
Concentrated aqueous solutions of anionic disazo dyes
Solutions aqueuses concentrées de colorants bisazoiques anioniques

(30) Priorität: 04.10.1990 CH 3201/90
(43) Veröffentlichungstag der Anmeldung: 08.04.1992
(73) Patentinhaber: CIBA-GEIGY AG, 4002 Basel (CH)
(72) Erfinder: Käser, Adolf, Dr., CH-4103 Bottmingen (CH)

(56) Entgegenhaltungen:
- CH-A- 497 515
- DE-A- 2 061 760
- GB-A- 1 565 180

## Beschreibung

Gegenstand der vorliegenden Erfindung sind konzentrierte wässrige Lösungen anionischer Disazofarbstoffe, enthaltend Salze anionischer Farbstoffe der Formel 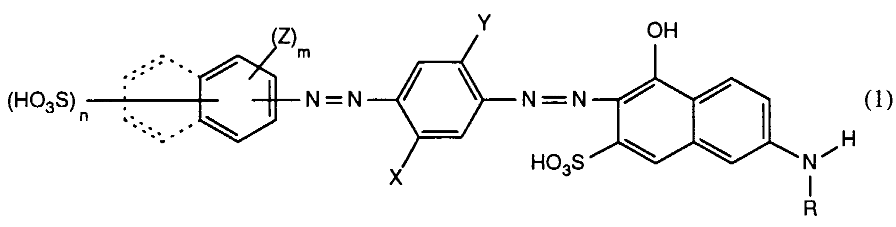 mit Polyglykolaminen der Formel 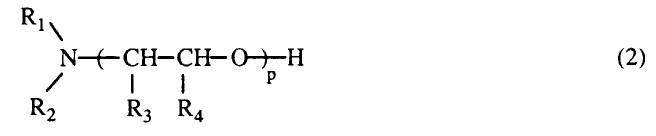 worin
X und Y unabhängig voneinander je Wasserstoff, Alkyl oder Alkoxy
R Wasserstoff oder Aryl,
Z Alkyl, Alkoxy, Halogen, Hydroxy oder Carboxy,
n 1 oder 2,
m 0, 1 oder 2,
R₁ und R₂ unabhängig voneinander je Alkyl oder die Gruppe 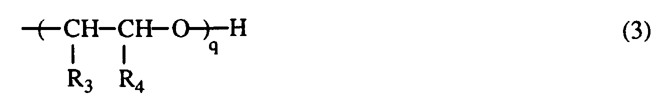
R₃ und R₄ unabhängig voneinander je Wasserstoff, Methyl oder Ethyl,
p eine Zahl von 2 bis 20 und
q eine Zahl von 1 bis 20 bedeuten,
und gegebenenfalls wasserlösliche organische Lösungsvermittler.

Unter Alkyl sind erfindungsgemäss generell geradkettige oder verzweigte Alkylgruppen zu verstehen. Vorzugsweise weisen diese 1 bis 4 C-Atome auf. Es handelt sich z.B. um Methyl, Ethyl, n-Propyl, i-Propyl, n-Butyl, i-Butyl, sec.-Butyl oder tert.-Butyl.

Geeignete Alkoxyreste sind vorzugsweise solche mit 1 bis 4 C-Atomen, z.B. Methoxy, Ethoxy, n-Propoxy, iso-Propoxy, n-Butoxy, iso-Butoxy, sec.-Butoxy oder tert.-Butoxy.

Unter Halogen ist Fluor, Brom, Jod oder vor allem Chlor zu verstehen.

Die Arylreste stellen aromatische carbocyclische oder heterocyclische Reste dar. Es handelt sich z.B. um Pyridyl, Naphthyl oder vor allem Phenyl. Diese Reste können substituiert sein, z.B. durch Halogen, Alkyl, Alkoxy oder Sulfo.

Geeignete anionische Disazofarbstoffe sind vorzugsweise solche der Formel 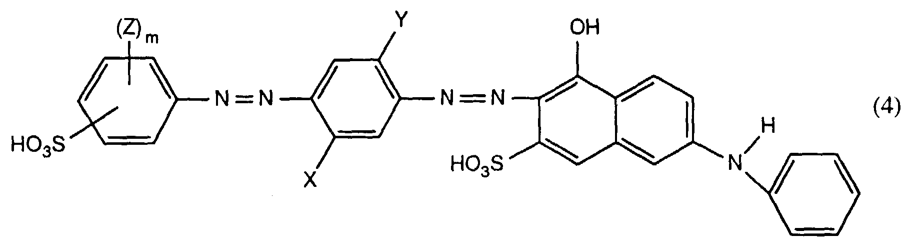 worin
Z Methyl
X und Y unabhängig voneinander je Wasserstoff, Methyl oder Methoxy und
m 0,1 oder 2 bedeuten.

Unter diesen sind diejenigen besonders bevorzugt, bei denen Z Methyl, m 0,1 oder 2, vor allem 0, X Methyl und Y Methoxy bedeuten.

Geeignete Polyglykolamine der Formel (2) sind beispielseise die Umsetzungsprodukte von Ammoniak sowie Alkyl- und Hydroxyalkylaminen wie Methylamin, Ethylamin, Dimethylamin, Ethanolamin, Diethanolamin, Triethanolamin, Mono-, Di- und Tri-iso-propanolamin mit Alkylenoxiden wie Ethylenoxid, 1,2-Propylenoxid, 1,2-Butylenoxid oder 2,3-Butylenoxid in geeigneten Mengenverhältnissen. Die Umsetzung erfolgt bei Temperaturen von etwa 50- 150°C. Es können dabei sowohl die reinen Alkylenoxide als auch Mischungen verschiedener Alkylenoxide verwendet werden.

Beispiele für Verbindungen dieser Art sind das Umsetzungsprodukt von Diisopropanolamin mit 4 Mol Ethylenoxid, das Umsetzungsprodukt von Triethanolamin mit 3 Mol Ethylenoxid, das Umsetzungsprodukt von Triisopropanolamin mit 6 Mol Ethylenoxid und das Umsetzungsprodukt von Ammoniak mit 2 Mol Butylenoxid und 4 Mol Ethylenoxid.

Besonders bevorzugte Polyglykolamine sind solche der Formel (2), worin R₁ und R₂ je eine Gruppe der Formel (3) bedeuten, insbesondere Umsetzungsprodukte von 1 Mol Triethanolamin mit 2 bis 4, vor allem 3 Mol Propylenoxid.

Diese Polyglykolamine sind bekannt, z.B. aus der DE-A-2.061.760 oder können auf die dort beschriebene Art hergestellt werden.

Geeignete wasserlösliche organische Lösungsvermittler sind beispielsweise Harnstoff, Formamid, Dimethylformamid, mit Wasser mischbare mehrwertige Alkohole wie Ethylenglykol, Propylenglykol, Glycerin, Alkanolamin wie Ethanolamin, Triethanolamin oder aber Polyglykolamine der Formel (2).

Die Herstellung der erfindungsgemässen konzentrierten Lösungen erfolgt im allgemeinen in der Weise, dass die freien Farbstoffsäuren mit einer Mischung aus Wasser und Polyglykolamin der Formel (2) verrührt werden, bis eine homogene Lösung entsteht.

Die Menge an Polyglykolamin kann dabei stark variieren, so dass (bezogen auf die zur vollständigen Salzbildung erforderlichen Menge) ein Unter- oder Ueberschuss vorliegen kann. Vorzugsweise setzt man jedoch mindestens die zur vollständigen Salzbildung erforderliche Menge ein.

Die Lösungen enthalten im allgemeinen:
5-40 Gew.% anionischen Farbstoff (berechnet als freie Säure),
20-90 Gew.% Wasser und
5-40 Gew.% Polyglykolamin.

Bevorzugte konzentrierte Lösungen enthalten
10-30 Gew.% Farbstoff,
10-30 Gew.% Polyglykolamin und
40-80 Gew.% Wasser.

Unter diesen sind solche Lösungen besonders bevorzugt, welche den Farbstoff der Formel (4) enthalten, worin m 0, X Methyl und Y Methoxy bedeutet und worin die Sulfogruppe am Phenylrest p-ständig zur Azobrücke steht.

Die erfindungsgemässen konzentrierten Lösungen zeichnen sich vor allem durch eine gute Lagerstabilität aus und durch eine niedrige Viskosität auch bei Temperaturen unter Raumtemperatur, z.B. bei 5°C.

Gegenüber der aus der DE-A-20 61 760 (Beispiel 4) bekannten Lösung eines ähnlichen Farbstoffes weisen sie vor allem den Vorteil der niedrigen Viskosität auf, so dass sie auch bei tiefen Temperaturen noch gut dosierbar sind.

Verwendung finden die erfindungsgemässen konzentrierten Farbstofflösungen, gegebenenfalls nach dem Verdünnen mit Wasser, insbesondere zum Färben und Bedrucken von Papier, einschliesslich Halbkartons und Kartons, wobei man diese Materialien z.B. in der Masse, durch Streichen oder durch Tauchen färben kann. Im übrigen kann eine derartige Flüssigformulierung auch für ein kontinuierliches oder diskontinuierliches Färbeverfahren für Textilmaterialien, insbesondere Cellulose, eingesetzt werden.

Die nachfolgenden Beispiele veranschaulichen die Erfindung.

### Beispiel 1: 64,7 g der freien Säure des Farbstoffs der Formel

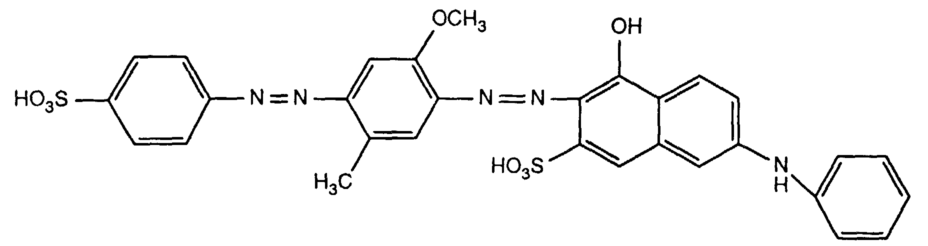

werden mit 71,1 g Polyglykolamin, hergestellt durch Umsetzung von 1 Aequivalent Triethanolamin mit 3 Aequivalent Propylenoxid, in 223 g Wasser verrührt, bis vollständige Lösung eingetreten ist. Man erhält eine hochkonzentrierte, stabile Lösung, welche auch bei 5°C noch sehr dünnflüssig ist.

### Beispiel 2: 67,5 g der freien Säure der Formel

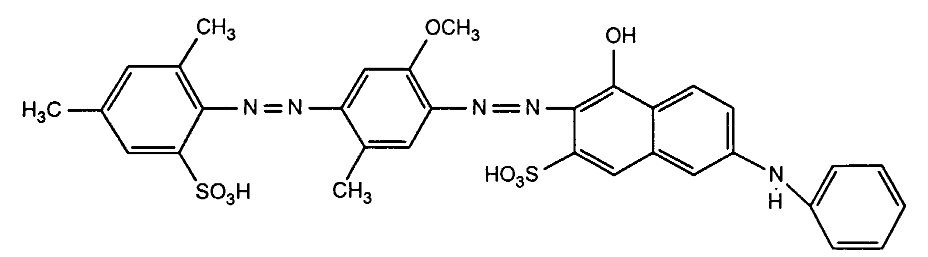

werden mit 87 g des im Beispiel 1 verwendeten Polyglykolamins in 809 g Wasser verrührt bis vollständige Lösung eingetreten ist. Man erhält eine stabile konzentrierte Farbstofflösung.

### Beispiel 3-15

Auf die gleiche Weise, wie in den Beispielen 1 und 2 beschrieben, lassen sich auch stabile konzentrierte Lösungen der folgenden Farbstoffe herstellen:

**Tabelle**

| Beispiel | 1. Diazokomponente | Mittelkomponente | Endkomponente |
|---|---|---|---|
| 3 | 2,4-Dimethylanilin-6-sulfonsäure | 2,5-Dimethylanilin | 6-Anilino-1-naphthol-3-sulfonsäure |
| 4 | 4-Methylanilin-2-sulfonsäure | 2,5-Dimethylanilin | 6-Anilino-1-naphthol-3-sulfonsäure |
| 5 | 2-Aminonaphthalin-4,8-disulfonsäure | 2,5-Dimethylanilin | 6-Anilino-1-naphthol-3-sulfonsäure |
| 6 | Anilin-3-sulfonsäure | 2-Amino-4-methyl-anisol | 6-Anilino-1-naphthol-3-sulfonsäure |
| 7 | 4-Methylanilin-2-sulfonsäure | 2-Amino-4-methyl-anisol | 6-Anilino-1-naphthol-3-sulfonsäure |
| 8 | 4-Chloranilin-3-sulfonsäure | 2-Amino-4-methyl-anisol | 6-Anilino-1-naphthol-3-sulfonsäure |
| 9 | 1-Naphthylamin-2-sulfonsäure | 2-Amino-4-methyl-anisol | 6-Anilino-1-naphthol-3-sulfonsäure |
| 10 | 2-Naphthylamin-4,8-disulfonsäure | 2-Amino-4-methyl-anisol | 6-Anilino-1-naphthol-3-sulfonsäure |
| 11 | Anilin-3-sulfonsäure | 2-Amino-anisol | 6-Anilino-1-naphthol-3-sulfonsäure |
| 12 | Anilin-4-sulfonsäure | 2,5-Dimethoxylanilin | 6-Anilino-1-naphthol-3-sulfonsäure |
| 13 | 4-Methoxyanilin-2-sulfonsäure | 3-Methoxyanilin | 6-Anilino-1-naphthol-3-sulfonsäure |
| 14 | Anilin-4-sulfonsäure | Anilin | 6-Amino-1-naphthol-3-sulfonsäure |
| 15 | 4-Chloranilin-3-sulfonsäure | 2-Amino-4-methyl-anisol | 6-Amino-1-naphthol-3-sulfonsäure |

## Patentansprüche

1. Konzentrierte wässrige Lösungen anionischer Disazofarbstoffe, enthaltend Salze anionischer Farbstoffe der Formel 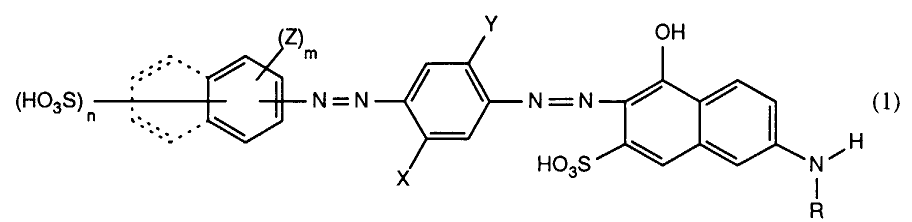 mit Polyglykolaminen der Formel 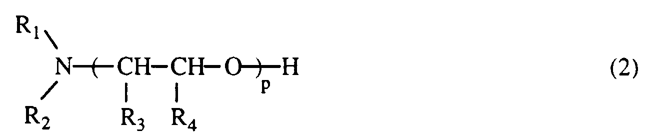 enthält, worin
X und Y unabhängig voneinander je Wasserstoff, Alkyl oder Alkoxy
R Wasserstoff oder Aryl,
Z Alkyl, Alkoxy, Halogen, Hydroxy oder Carboxy,
n 1 oder 2,
m 0,1 oder 2,
R₁ und R₂ unabhängig voneinander je Alkyl oder die Gruppe 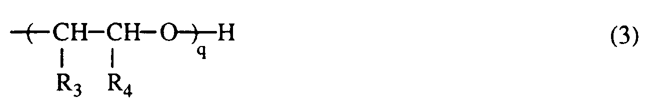
R₃ und R₄ unabhängig voneinander je Wasserstoff, Methyl oder Ethyl,
p eine Zahl von 2 bis 20 und
q eine Zahl von 1 bis 20 bedeuten,
und gegebenenfalls wasserlösliche organische Lösungsvermittler.

2. Konzentrierte wässrige Lösung gemäss Anspruch 1, dadurch gekennzeichnet, dass sie einen Farbstoff der Formel 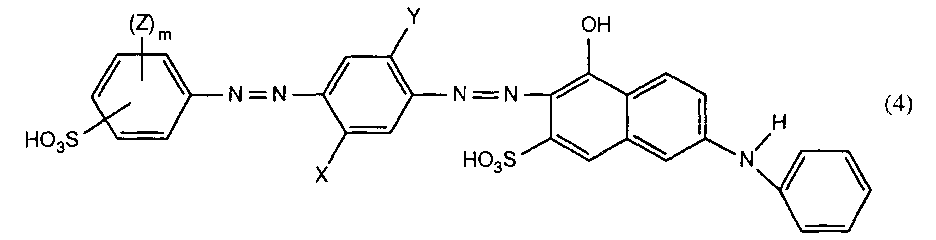 worin
Z Methyl,
X und Y unabhängig voneinander je Wasserstoff, Methyl oder Methoxy und
m 0,1 oder 2 bedeuten.

3. Konzentrierte wässrige Lösungen gemäss Anspruch 2, dadurch gekennzeichnet, dass sie einen Farbstoff der Formel (4) enthalten, worin Z Methyl, m 0,1 oder 2, vor allem 0, X Methyl und Y Methoxy bedeuten.

4. Konzentrierte wässrige Lösungen gemäss einem der Ansprüche 1-3, dadurch gekennzeichnet, dass sie ein Polyglykolamin der Formel (2) enthalten, worin R₁ und R₂ je eine Gruppe der Formel (3) bedeuten,

5. Konzentrierte wässrige Lösungen gemäss einem der Ansprüche 1 bis 4, dadurch gekennzeichnet, dass sie 5 bis 40 Gew.% Farbstoff der Formel (1), 5-40 Gew.% Polyglykolamin der Formel (2) und 20 bis 90 Gew.% Wasser enthalten.

6. Konzentrierte wässrige Lösungen gemäss Anspruch 5, dadurch gekennzeichnet, dass sie 10 bis 30 Gew.% Farbstoff der Formel (1), 10 bis 30 Gew.% Polyglykolamin der Formel (2) und 40 bis 80 Gew.% Wasser enthalten.

7. Konzentrierte wässrige Lösungen gemäss Anspruch 6, dadurch gekennzeichnet, dass sie den Farbstoff der Formel (4) enthalten, worin m 0, X Methyl und Y Methoxy bedeutet und worin die Sulfogruppe am Phenylrest p-ständig zur Azobrücke steht.

## Claims

1. A concentrated aqueous solution of anionic disazo dyes, comprising salts of anionic dyes of the formula 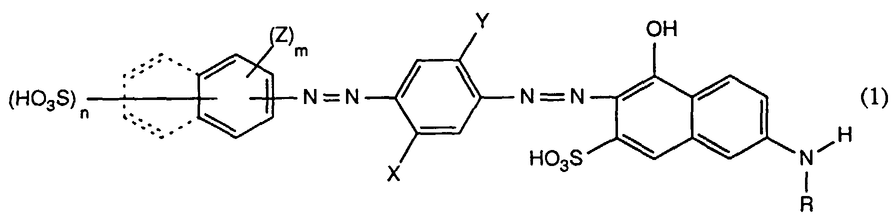 with polyglycol amines of the formula 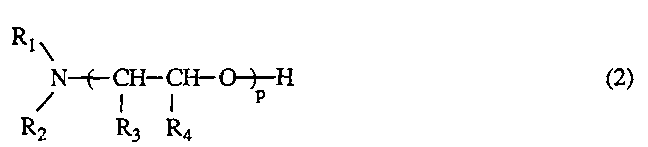 in which X and Y, independently of one another, are each hydrogen, alkyl or alkoxy, R is hydrogen or aryl, Z is alkyl, alkoxy, halogen, hydroxyl or carboxyl, n is 1 or 2, m is 0, 1 or 2, R₁ and R₂, independently of one another, are each alkyl or the group 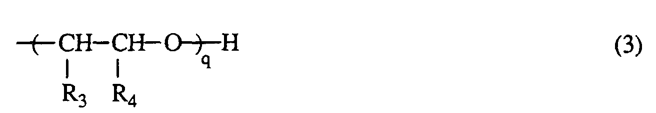 R₃ and R₄, independently of one another, are each hydrogen, methyl or ethyl, p is a number from 2 to 20 and q is a number from 1 to 20, and, if desired, water-soluble organic solubilising agents.

2. A concentrated aqueous solution according to claim 1, which comprises a dye of the formula 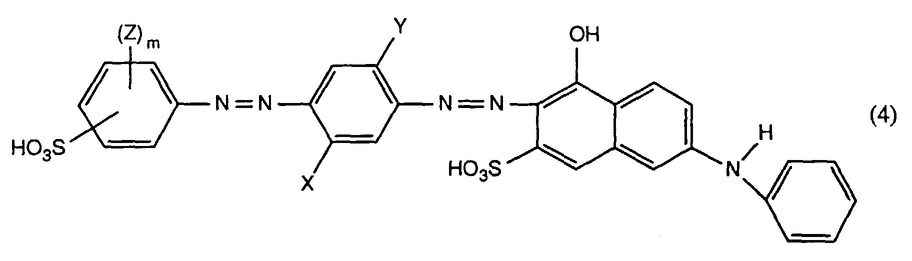 in which Z is methyl, X and Y, independently of one another, are each hydrogen, methyl or methoxy and m is 0, 1 or 2.

3. A concentrated aqueous solution according to claim 2, which comprises a dye of the formula (4) in which Z is methyl, m is 0, 1 or 2, in particular 0, X is methyl and Y is methoxy.

4. A concentrated aqueous solution according to any one of claims 1-3, which comprises a polyglycol amine of the formula (2) in which R₁ and R₂ are each a group of the formula (3).

5. A concentrated aqueous solution according to any one of claims 1 to 4, which comprises 5 to 40 % by weight of dye of the formula (1), 5-40 % by weight of polyglycol amine of the formula (2) and 20 to 90 % by weight of water.

6. A concentrated aqueous solution according to claim 5, which comprises 10 to 30 % by weight of dye of the formula (1), 10 to 30 % by weight of the polyglycol amine of the formula (2) and 40 to 80 % by weight of water.

7. A concentrated aqueous solution according to claim 6, which comprises the dye of the formula (4) in which m is 0, X is methyl and Y is methoxy and in which the sulfo group on the phenyl radical is in the p-position relative to the azo bridge.

## Revendications

1. Solutions aqueuses concentrées de colorants bis-azoïques anioniques, qui contiennent des sels de colorants anioniques de formule 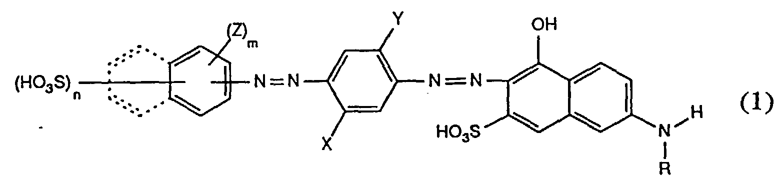 et de polyglycol-amines de formule 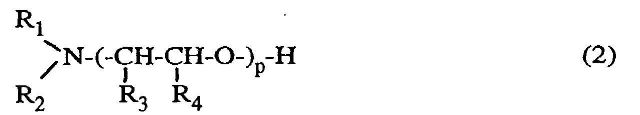 formules dans lesquelles
X et Y représentent chacun, indépendamment l'un de l'autre, un atome d'hydrogène ou un groupe alkyle ou alcoxy,
R représente un atome d'hydrogène ou un groupe aryle,
Z représente un atome d'halogène ou un groupe alkyle, alcoxy, hydroxy ou carboxy,
n vaut 1 ou 2,
m vaut 0, 1 ou 2,
R₁ et R₂ représentent chacun, indépendamment l'un de l'autre, un groupe alkyle ou un groupe de formule 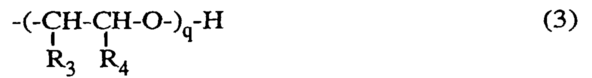
R₃ et R₄ représentent chacun, indépendamment l'un de l'autre, un atome d'hydrogène ou un groupe méthyle ou éthyle,
p représente un nombre valant de 2 à 20, et
q représente un nombre valant de 1 à 20,
ainsi que, le cas échéant, des tiers-solvants organiques hydrosolubles.

2. Solutions aqueuses concentrées conformes à la revendication 1, caractérisées en ce qu'elles contiennent un colorant de formule 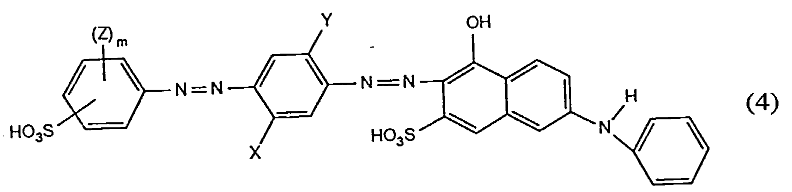 dans laquelle Z représente un groupe méthyle, X et Y représentent chacun, indépendamment l'un de l'autre, un atome d'hydrogène ou un groupe méthyle ou méthoxy, et m vaut 0, 1 ou 2.

3. Solutions aqueuses concentrées conformes à la revendication 2, caractérisées en ce qu'elles contiennent un colorant de formule (4) où Z représente un groupe méthyle, m vaut 0, 1 ou 2, et surtout 0, X représente un groupe méthyle et Y représente un groupe méthoxy.

4. Solutions aqueuses concentrées conformes à l'une des revendications 1 à 3, caractérisées en ce qu'elles contiennent une polyglycol-amine de formule (2) où R₁ et R₂ représentent chacun un groupe de formule (3).

5. Solutions aqueuses concentrées conformes à l'une des revendications 1 à 4, caractérisées en ce qu'elles contiennent de 5 à 40 % en poids de colorant de formule (1), de 5 à 40 % en poids de polyglycol-amine de formule (2) et de 20 à 90 % en poids d'eau.

6. Solutions aqueuses concentrées conformes à la revendication 5, caractérisées en ce qu'elles contiennent de 10 à 30 % en poids de colorant de formule (1), de 10 à 30 % en poids de polyglycol-amine de formule (2) et de 40 à 80 % en poids d'eau.

7. Solutions aqueuses concentrées conformes à la revendication 6, caractérisées en ce qu'elles contiennent du colorant de formule (4) où m vaut 0, X représente un groupe méthyle, Y représente un groupe méthoxy et le groupe sulfo est placé, sur le cycle phényle, en-position para par rapport au chaînon pontant azo.
